# EUROPEAN PATENT SPECIFICATION

(11) **EP 1 728 580 B1**
(45) Date of publication and mention of the grant of the patent: **30.07.2008**
(21) Application number: 06114738.5
(22) Date of filing: 30.05.2006
(51) Int. Cl.: B23K 20/18, B23K 20/02, B21D 26/02

(54) **Method of forming super plastic diffusion bonding panel**
Verfahren zur Herstellung eines superplastischen Diffusionsverbindungs-Panels
Procédé de formation d' un panneau superplastique lié par diffusion

(30) Priority: 01.06.2005 JP 2005161518
(43) Date of publication of application: 06.12.2006
(73) Proprietor: Fuji Jukogyo Kabushiki Kaisha, Tokyo 160-8316 (JP)
(72) Inventor: Yajima, Shinichi, Shinjuku-ku 160-8316 Tokyo (JP)
(74) Representative: Manley, Nicholas Michael

(56) References cited:
- EP-A- 1 332 828
- US-A- 4 304 821
- US-A- 6 087 640
- US-A1- 2002 179 688
- US-A1- 2003 155 407

## Description

### BACKGROUND OF THE INVENTION

### Field of the invention

The present invention relates to a method of forming super plastic diffusion bonding panels. The method includes integrating a plurality of metal plates such as titanium alloy, used for portions that especially require heat resistance such as an aircraft structure, and forming a panel by utilizing techniques of super plastic forming and diffusion molding.

### Description of the Related Art

Many of titanium alloy, or part of aluminum alloy and nickel alloy have super plasticity, and it is known that titanium alloys with appropriate composition show elongation reaching up to several hundred percent, for example. These super plastic materials can be formed relatively easily by using a super plastic forming apparatus, even for remarkably complicated shapes.

In JP-2002-18532A (hereinafter referred to as patent document 1), a forming method in which a supporting plate is overlapped on both sides of a laminated body of three metal plates that structure a hollow panel with intermediary of an application layer of anti-bonding agent; the laminated body of metal plates that is sandwiched by the supporting plate is set into the forming mold; and super plastic forming is conducted under control of the outermost layer of the metal plates by the supporting plate; wherein the control is done by a pressure that is lower than the pressure applied to non-bonding region within the panel, being applied between the internal wall of the forming mold and the supporting plate.

In JP-H9-47825A (hereinafter referred to as patent document 2), a super plastic forming apparatus that picks super plastic material subject to forming by upper and lower metal molds that have planar or curved surfaces which are parallel with each other, and controls the pressure between the metal molds so as to correspond to the expansion pressure of the panel at the time of super plastic forming, by moving the lower mold up and down, is disclosed.

In US-A-2003/0155407, in a process for the monolithic molding of superplastic material, generation of wrinkles on the molded product can be prevented by avoiding local expansion generated in the no-bonding regions of three or more metal plates when the metal plates are monolithically molded by means of superplastic molding. Auxiliary plates for molding are placed on both sides of the superposed plates through the no-bonding regions, these plates are set in the molding die and a pressure lower than applied to the non-bonding regions is applied to spaces between inner wall of the molding die and the auxiliary plates to control movement of the top and bottom.

According to the invention disclosed in patent document 1, local expansion is prevented by the supporting plate which is applied with pressure on the back side. Thus, generation of wrinkles on the surface of the panel can be prevented.

However, according to the invention disclosed in patent document 1 and conventional technology which corresponds to a technology in which the supporting plate of patent document 1 is omitted, as shown in FIG. 12, since the periphery of metal sheets 1, 2, and 3, that have super plasticity, is cramped by forming mold 30, forming at the panel edge portion 41 which receives larger restraint compared to the center portion, becomes relatively slow, and forming at the panel center portion 40 becomes relatively fast.

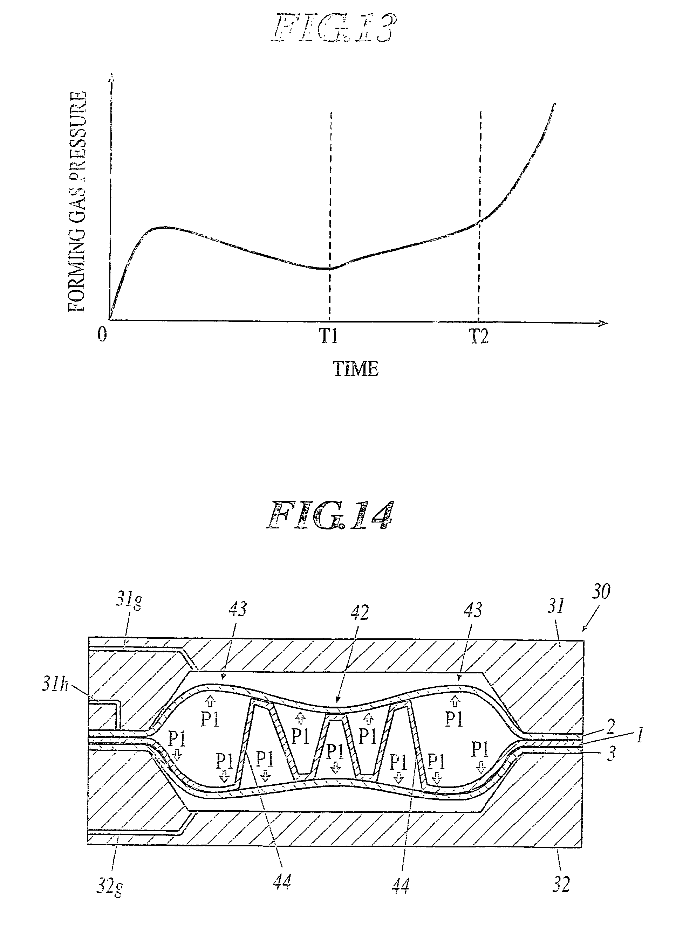

FIG. 13 is a graph showing change of forming gas pressure controlled in accordance with the degree of progress in super plastic forming. Here, the forming gas pressure is a value that is obtained by subtracting the gas pressure at the outside of the panel from the gas pressure introduced to to the inside of the panel.

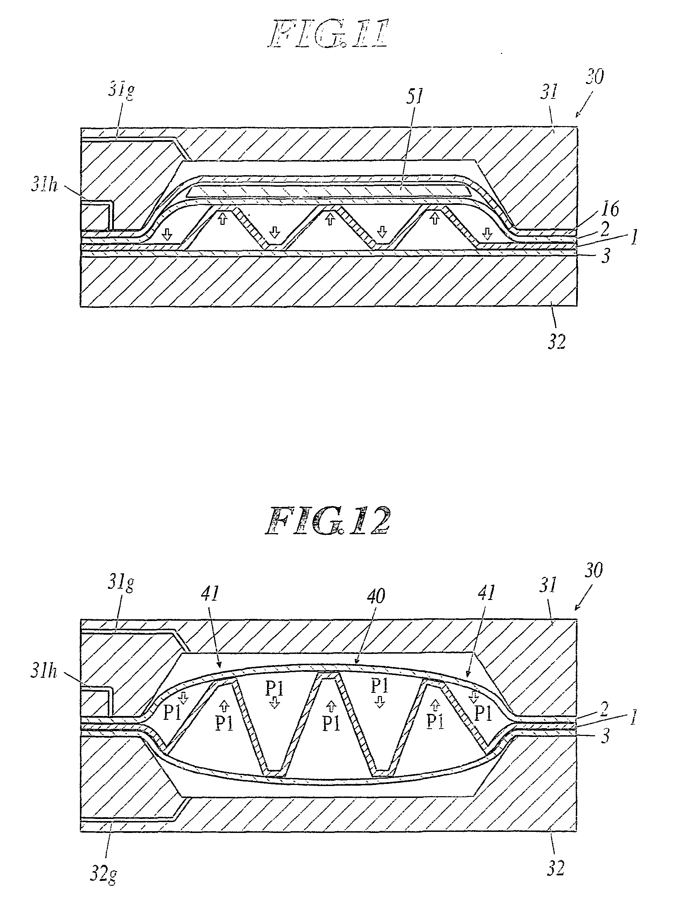

Concerning super plastic forming, since the core sheet 1 tears when the forming speed is fast, it is required to progress forming by an appropriate forming speed. As shown in FIG. 12, if the forming speed differs between the portions of the panel, during initial stage of forming, forming is progressed with a forming gas pressure that is appropriate for the portion 40, where forming is fast. The forming gas pressure during this stage is lower than the appropriate value concerning portion 41, where forming is slow. After the point of time when the portion 40, where forming speed is fast, reaches the forming mold 30 (t1 in FIG. 13), forming of the portion that reached the forming mold stops. Therefore, it is required to raise the forming gas pressure gradually for the forming of portion 41, where forming speed is relatively slow and have not yet reached the forming mold 30. Thereafter, all portions reach the forming mold 30 (t2 in FIG. 13), and the panel structured with sheets 1, 2, and 3 will have a shape that corresponds to the internal wall of the forming mold 30.

Evenif an idealistic control as mentioned above is achieved, the forming gas pressure during the time from 0 to t1 is lower than the appropriate value for the portion 41, where forming is slow. Therefore, the time required to complete forming of all portions would become long, thus not efficient.

In addition, in a practical sense, since forming cannot be progressed within direct monitoring, the degree of progress in forming is determined by indirect ways such as from results obtained from behavior of change in forming gas pressure, or from simulations. Therefore, it is difficult to conduct idealistic control of the forming gas pressure as mentioned above.

As a result, local tearing of the core sheet due to increasing the forming gas pressure before the forming progresses, and further elongation of the time for forming due to low forming gas pressure, have arisen as a problem. Thus efficiency is not achieved.

Here, if the panel is structured without core sheet 1, that is, if the panel is structured with two super plastic metal sheets, unevenness of forming speed among portions occurs, and the problems mentioned above occur similarly.

As shown in FIG. 14, concerning a structure wherein the density of the core changes within one panel, forming at portion 43 where the density of the core is lower, is faster compared to portion 42, where the density of the core is higher. Therefore, the final position of the core varies due to the variation of degree of progress in forming, resulting in a problem that it is difficult to form the core with precise accuracy. In addition, since the load applied to the portion of core 44 where the density of core changes, becomes large, there is a problem that core sheet 1 is easily torn.

According to the apparatus disclosed in patent document 2, by moving the forming mold up and down within the progress of forming, forming speed can be made even, thus the aforementioned problems arising from unevenness of forming speed among portions can be solved.

However, according to the apparatus disclosed in patent document 2, since the forming mold opens in accordance with the expansion of the panel, the edge of the panel would have a shape that depends on the expansion, therefore resulting in a problem that it cannot be formed into a desired figure by the forming mold.

In addition, according to the apparatus disclosed in patent document 2, a complicated mechanical apparatus is required to move the mold up and down, thus resulting in a problem that the apparatus becomes large and costly.

### SUMMARY OF THE INVENTION

The present invention has been made to solve the aforementioned problems relating to the conventional technique. An object of the present invention is to achieve easy and efficient forming, by making even the forming speed of super plastic forming concerning super plastic diffusion bonding panel.

In addition, an object of the present invention is also to achieve precisely accurate forming of super plastic diffusion bonding panel into a desired figure that includes outline figure of the end portion of the panel as well as core figure in case there is a core, by making even the forming speed of super plastic forming concerning super plastic diffusion bonding panel.

Further, an object of the present invention is to also achieve the evenness of forming speed of the core concerning super plastic diffusion bonding panel, by an apparatus with a simple structure as possible.

According to the first aspect of the present invention, the method to form super plastic diffusion bonding panel, comprises the steps of:
overlapping at least two metal plates that are capable of conducting super plastic forming and diffusion bonding;
setting a laminated body which includes the metal plates that are overlapped, into a forming mold; and
conducting diffusion bonding for overlapped portions of the metal plates that correspond to a bonding region, by heating inside the forming mold, as well as conducting super plastic forming of a panel with a pressure applied to a non-bonding region in between the metal plates by introducing inert gas;
wherein a plate is placed on the external side of one of the metal plates which is an outermost layer of the laminated body;
characterised in that the plate maintains a constant figure during the super plastic forming, is provided with a forming surface to form a face of the panel on one side of the plate, and can fit into the forming mold with a space for the panel to occupy at a state in which the mold is closed after completion of forming;
a supporting body that supports the plate is disposed in between the plate and an internal wall of the forming mold that faces the plate; and
super plastic forming is conducted in the state that the mold is closed, while pressing the forming surface of the plate to the one of the metal plates which is the outermost layer by the supporting body, and moving the plate along movement of surface of the outermost layer due to expansion of the laminated body by the inert gas.

Preferably, the supporting body to support the plate is deformable when the super plastic forming is conducted; flow passage of gas is blocked within forming space in the forming mold by setting the laminated body, the plate, and the first supporting body into the forming mold and closing the forming mold; and the pressing is conducted by a lower pressure that is lower than the pressure applied to non-bonding region, and is applied in between the first supporting body and internal wall of the forming mold that face the first supporting body, as well as the movement is conducted by pressure difference, wherein the pressure difference is difference between the lower pressure and the pressure applied to non-bonding region.

Preferably, the supporting body supports the plate by elastic deformation; and the pressing is conducted by elastic force of the second supporting body, as well as the movement is conducted along with elastic deformation of the second supporting body.

Preferably, the supporting body supports the plate and yields by a pressure of a predetermined pressure or larger; and the pressing is conducted by pressing the third supporting body with the pressure applied to non-bonding region, as well as the movement is conducted along with plastic deformation of the third supporting body.

Preferably, the supporting body is a metal honeycomb.

According to the present invention, since the forming speed of the panel at the portion where it follows the plate can be made even, the difficulty of controlling the forming gas pressure to handle the unevenness of the forming speed can be eliminated or reduced, as well as the time required for forming can be shortened, thus there is an advantage that the super plastic forming can be conducted easily and efficiently.

In addition, since super plastic forming is conducted within the forming mold closed, panel edge of the periphery of the panel face can be formed by the forming mold. Further, since the forming speed of the super plastic forming is even, there is an advantage in that precisely accurate forming of super plastic diffusion bonding panel into a desired figure that includes outline figure of the end portion of the molded product as well as core figure in case there is a core, can be conducted.

In addition, by conducting pressing by the plate and the movement of the plate in accordance with the present invention, it can be conducted by installing only the plate and the supporting body to the existing apparatus. Therefore, there is an advantage in that installation of complicated mechanical structure and its motive energy can be avoided, and evenness of forming speed concerning super plastic forming by an apparatus with a simple structure as possible can be achieved.

### BREIF DESCRIPTION OF THE DRAWINGS

By way of example only, specific embodiments of the present invention will now be described with reference to the accompanying drawings, in which:-
FIG. 1 is an exploded perspective view showing a laminated body structured with three metal plates according to the first embodiment of the present invention;
FIG. 2 is a cross sectional view showing the laminated body structured with three metal plates according to the first embodiment of the present invention;
FIG. 3 is a cross sectional view showing a state in which the laminated body structured with three metal plates, a plate, and a supporting plate are overlapped, according to the first embodiment of the present invention;
FIG. 4 is a cross sectional view of a forming apparatus according to the first embodiment of the present invention;
FIG. 5 is a partially magnified view of FIG. 4;
FIG. 6 is a cross sectional view of forming mold and its interior during forming, according to the first embodiment of the present invention;
FIG. 7 is a cross sectional view of forming mold and its interior during forming, according to the second embodiment of the present invention;
FIG. 8 is a cross sectional view of forming mold and its interior during forming, according to the third embodiment of the present invention;
FIG. 9 is a perspective view of two metal plates that are electron beam welded according to the fourth embodiment of the present invention;
FIG. 10 is a perspective view of three metal plates that are electron beam welded according to the fourth embodiment of the present invention;
FIG. 11 is cross sectional view of forming mold and its interior in which expansion progresses only at one side according to the embodiment of the present invention;
FIG. 12 is a cross sectional view of forming mold and its interior at the time of forming a panel with constant density of core according to a conventional technique;
FIG. 13 is a graph showing change of forming gas pressure controlled within the degree of progress of super elastic forming according to the conventional technique; and
FIG. 14 is a cross sectional view of forming mold and its interior at the time of forming a panel with unevenly distributed core according to the conventional technique.

### DETAILED DESCRIPTION OF THE PREFERRED EMBODIMENT

An embodiment of a method of forming super plastic diffusion bonding panel of the present invention will be described with reference to figures.

### [First Embodiment]

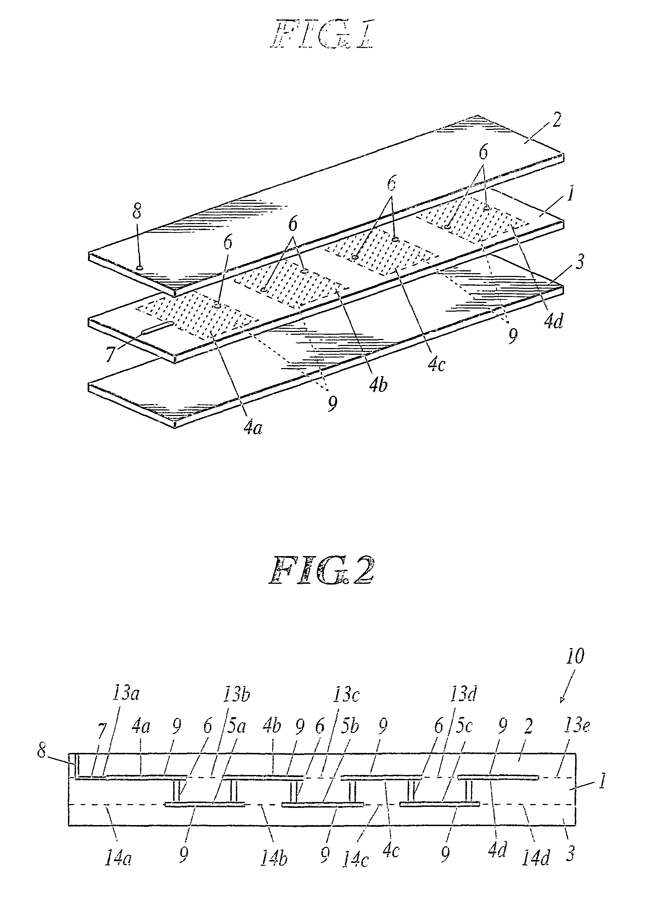

The first embodiment of the present invention is described with reference to FIGS. 1-6.

First of all, three sheet materials of 1, 2, and 3, that are structured with a metal plate material capable of super plastic forming and diffusion bonding, such as titanium alloys of Ti-6Al-4V, Ti-4.5Al-3V-2Fe-2Mo, Ti-6Al-6V-2Sn and the like for example, are prepared. Among these sheet materials of 1, 2, and 3, to one surface of the core sheet 1, which is positioned in center in case the sheet materials are overlapped as shown in FIG 1, non-bonding regions of 4a, 4b, 4c, and 4d are provided. Concurrently, non-bonding regions of 5a, 5b, and 5c are provided on the other surface of the core sheet 1, so that they overlap partially with the non-bonding regions of 4a, 4b, 4c, and 4d, when observed from plane surface (refer to FIG. 2). In each of the portions where the non-bonding regions of 4a, 4b, 4c, and 4d on one surface and the non-bonding regions of 5a, 5b, and 5c on the other surface overlap when observed from plane surface, a gas hole 6 is provided in advance, and a forming gas introduction groove 7 is formed to the core sheet 1 so that one end of the forming gas introduction groove 7 comes into the non-bonding region 4a.

Meanwhile, among the two face sheets 2 and 3 that sandwich the core sheet 1, face sheet 2 is provided with a forming gas providing hole 8 so as to communicate with one end of a forming gas introduction channel that is formed by the forming gas introduction groove 7 and the face sheet 2 when the face sheet 2 is overlapped with the core sheet 1.

Subsequently, anti-bonding agent 9 such as yttria is applied on each of the non-bonding regions of 4a, 4b, 4c, 4d, and 5a, 5b, 5c of the core sheet 1. Laminated body 10 is then formed by overlapping face sheets 2 and 3 on both sides of the core sheet 1 as shown in FIG. 2.

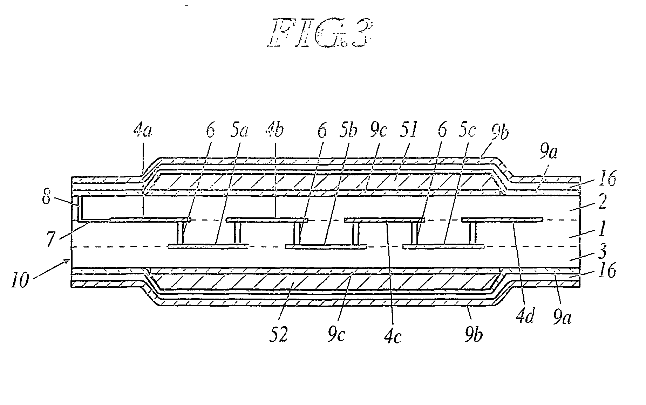

Next, as shown in FIG. 3, to the external side of the face sheet 2 of the laminated body 10, plate 51 is placed with intermediary of an application layer 9c of anti-bonding agent 9. In a similar manner, to the external side of the face sheet 3, plate 52 is placed with intermediary of an application layer 9c of anti-bonding agent 9.

As for materials of plates 51 and 52, material that is difficult to deform and can maintain a constant figure under the conditions during super plastic forming, that is, under the burden of temperature, weight, and the like, is used. In case the sheet materials 1, 2, and 3 are titanium alloy, the temperature in the mold during super plastic forming becomes 780 to 900 degrees Celsius, thus stainless steel SUS 310 can be applied as plates 51 and 52. Other materials such as metals with heat resistance and high stiffness, such as ceramics, and the tike can be also applied.

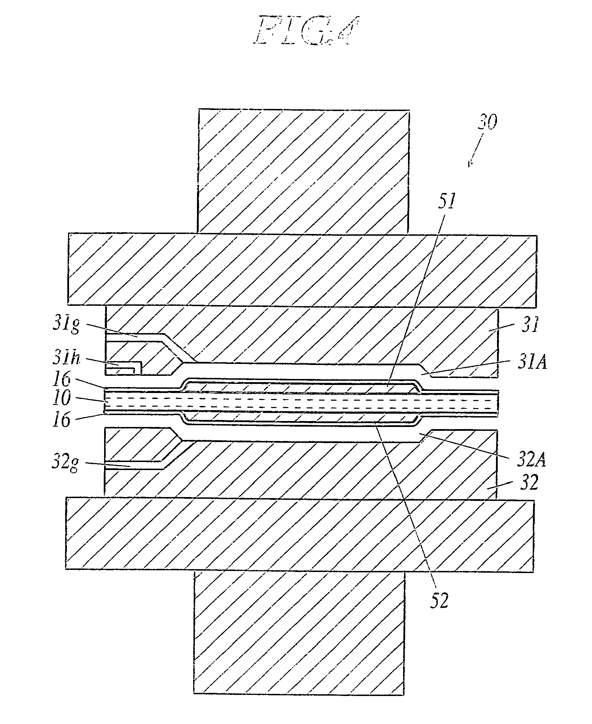

Plates 51 and 52 have a shape and size that can fit into the forming mold 30 of FIG. 4, with space left for the formed product to occupy in a state with the mold closed after forming is completed.

Next, plates 51 and 52 are each covered by overlapping supporting plate 16 with intermediary of an application layer 9a of anti-bonding agent 9. As shown in FIG. 4, into the forming mold 30 structured with a first forming mold 31 and a second forming mold 32, laminated body 10 and plates 51 and 52, that are sandwiched with supporting plate 16, are set. Subsequently, the interior of the mold is sealed by applying compressive load to the forming mold 30 by all oil hydraulic press and the like. At this time, the periphery of the supporting plate 16 and the laminated body 10 is pressed by the forming mold 30, and the plates 51 and 52 are fit into the forming mold 30. Here, to the portion of supporting plate 16 where it overlaps with the forming gas providing hole 8 provided to the face sheet 2, a hole (not shown) that becomes communicated with the forming gas providing hole 8 is provided, and when the mold is closed, a forming gas providing hole 31h provided to the first forming mold 31 connects with this hole.

Here, concerning the supporting plate 16, an economical material that has higher deforming stress than face sheets 2 and 3, and also has several tens of percent of elongation at the forming temperature during super plastic forming can be used. In case there is no appropriate material, material identical to the face sheets 2 and 3 can be also used.

In addition, the plate thickness of the supporting plate 16 is determined according to materials subject to forming, height of plates 51 and 52, shapes of the panel and plates 51 and 52, and the like.

It is preferable to apply anti-bonding agent 9b also on the external side of the supporting plate 16, in order to make releasing from the mold after forming easy.

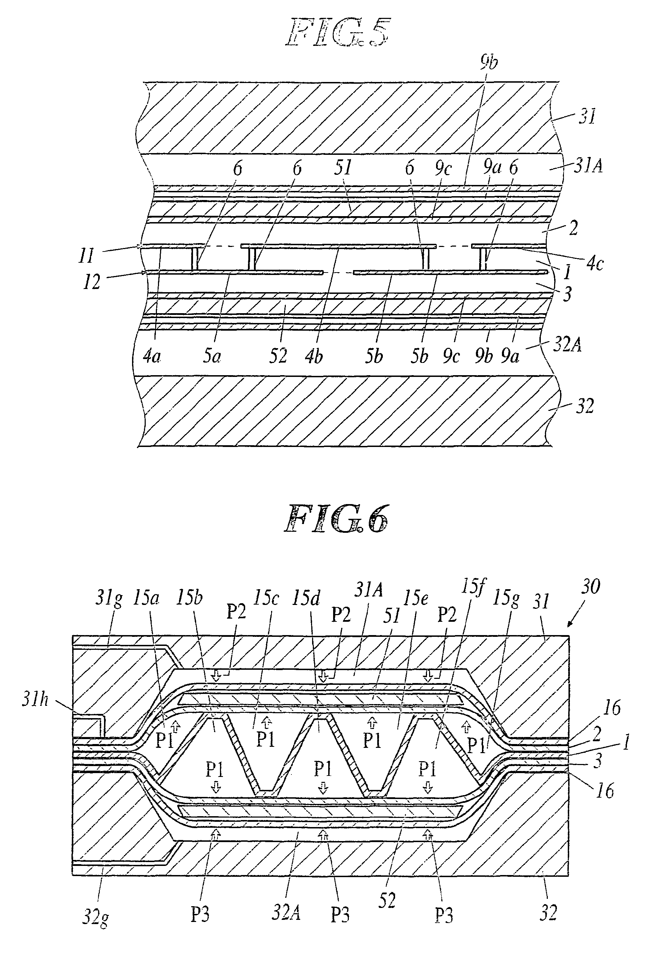

After setting the laminated body 10 and plates 51 and 52, that are sandwiched by the supporting plate 16, into the forming mold 30, internal spaces of the first forming mold 31 and the second forming 32, that is, 31A and 32A, are replaced with inert gas such as argon through the gas providing holes of 31g and 32g. Simultaneously, as shown in FIG. 5 which is partially enlarged FIG. 4, concerning the laminated body 10, interfaces 11 and 12, that are each in between the core sheet 1 and the face sheet 2 and in between the core sheet 1 and the face sheet 3, are vacuumed through the forming gas providing hole 31h. Then, the entire laminated body 10 and the forming mold 30 are heated, and after being heated to a predetermined temperature, inert gas is introduced into the internal spaces of the forming mold 30, that is 31A and 32A, through the gas providing holes 31g and 32g at a predetermined pressure. Thus the bonding regions 13a, 13b, 13c, 13d, 13e of the core sheet 1 and the face sheet 2, and the bonding regions 14a, 14b, 14c, 14d of the core sheet 1 and the face sheet 3 (refer to FIG. 2) are diffusion bonded.

Thereafter, inert gas is introduced into the non-bonding region 4a in between the core sheet 1 and the face sheet 2. Here, the introduction of inert gas into the non-bonding region 4a is conducted from the forming gas providing hole 31h which has an opening on the first forming mold 31, into the forming gas providing hole 8 and the forming gas introduction groove 7.

By the pressure of the inert gas introduced into the non-bonding region 4a with the anti-bonding agent 9, the portions corresponding to non-bonding region 4a of the core sheet 1 and face sheets 2 and 3, undergoes super plastic deformation and expands, and as shown in FIG. 6, first expansion room 15a is formed.

Meantime, the inert gas is introduced into the non-bonding region 5a with the anti-bonding agent 9, through the gas hole 6 that communicates with both sides of the core sheet 1, and pressure is applied. Thus, the portions corresponding to non-bonding region 5a of the core sheet 1 and face sheets 2 and 3, undergoes super plastic deformation, and second expansion room 15b is formed.

Continuously, the inert gas introduced into the second expansion room 15b is introduced into the non-bonding region 4b with the anti-bonding agent 9, through the gas hole 6. The portions corresponding to non-bonding region 4b of the core sheet 1 and face sheets 2 and 3, undergoes super plastic deformation, and third expansion room 15c is formed.

Further, the introduced inert gas is introduced into non-bonding regions 4b, 5b, 4c, and 5c in order, through the gas hole 6. The portions corresponding to each non-bonding regions of the core sheet 1 and face sheets 2 and 3, undergoes super plastic deformation, and as shown in FIG. 6, fourth expansion room 15d, fifth expansion room 15e, sixth expansion room 15f, and seventh expansion room 15g are formed in order.

In the aforementioned super plastic deforming processing, as shown in FIG. 6, to the internal space 31a, which is in between the interior wall of the first forming mold 31 and the supporting plate 16, pressure P2, which is a pressure lower than pressure P1 that is introduced into each of the aforementioned non-bonding regions of 4a, 4b, 4c, 4d, 5a, 5b, 5c, is applied by introducing inert gas through the gas providing hole 31g (P1>P2).

In a similar manner, to the internal space 32A, which is in between the interior wall of the second forming mold 32 and the supporting plate 16, pressure P3, which is a pressure lower than pressure P1, is applied by introducing inert gas through the gas providing hole 32g (P1>P3).

By this low pressure P2, the forming surface of the plate 51 is pressed against the face sheet 2, and a panel face is formed on the external surface of the face sheet 2 and is maintained. In case only pressure P1 is applied, face sheet 2 expands convexly. P2 is applied so that plate 51 is pressed against the face sheet 2 and the face sheet 2 is kept under restraint in an initial planar state within the surface of the plate 51, as shown in FIG. 4. Thus, convex expansion of the face sheet 2 is restricted.

In a similar manner, by pressure P3, forming surface of the other plate 52 is pressed against the face sheet 3, and a panel face is formed on the external surface of the face sheet 3 and is maintained. In case only pressure P1 is applied, face sheet 3 expands convexly. P3 is applied so that plate 52 is pressed against the face sheet 3 and the face sheet 3 is kept under restraint in an initial planar state within the surface of the plate 52, as shown in FIG. 4. Thus, convex expansion of the face sheet 3 is restricted.

By applying pressing force by pressures P2 and P3, a state in which the entire surface of both of the plates 51 and 52 are each attached firmly to the two sides of the laminated body 10 is achieved as shown in FIG. 4, at the time of starting super plastic forming. The state in which surfaces of both of the plates 51 and 52 are each kept attached firmly to the two sides of the laminated body 10, is maintained throughout the beginning of the super plastic forming to the end of the super plastic forming.

Within the aforementioned super plastic forming, concerning a planar panel face, forming speed can be made even.

If pressures P2 and P3 are not sufficient, the periphery of the plates 51 and 52 and the face sheets 2 and 3 will not come in contact and a gap will occur. However, the difference in forming speed decreases, thus there is an advantage in that easy and efficient forming can be achieved even in this case.

During super plastic forming processing, pressures P1, P2, and P3 are controlled so that there is no portion in which the plates 51 and 52 do not come in contact with the face sheets 2 and 3. Pressures P1, P2, and P3 are determined by conducting forming simulation.

In due time, supporting plate 16 will reach the internal surface of the first forming mold 31 and the internal surface of the second forming mold 32, and the super plastic forming is completed. Here, forming of panel end surface in the vicinity of panel face that face the plates 51 and 52, are completed by the internal surface of the first forming mold 31 and the internal surface of the second forming mold 32 (inclined surface shown in figure).

The molded product obtained by the processing described above is taken out of the forming mold 30, then the shape of the molded product is adjusted by trim processing or the like, and a panel as a product is obtained.

### [Second Embodiment]

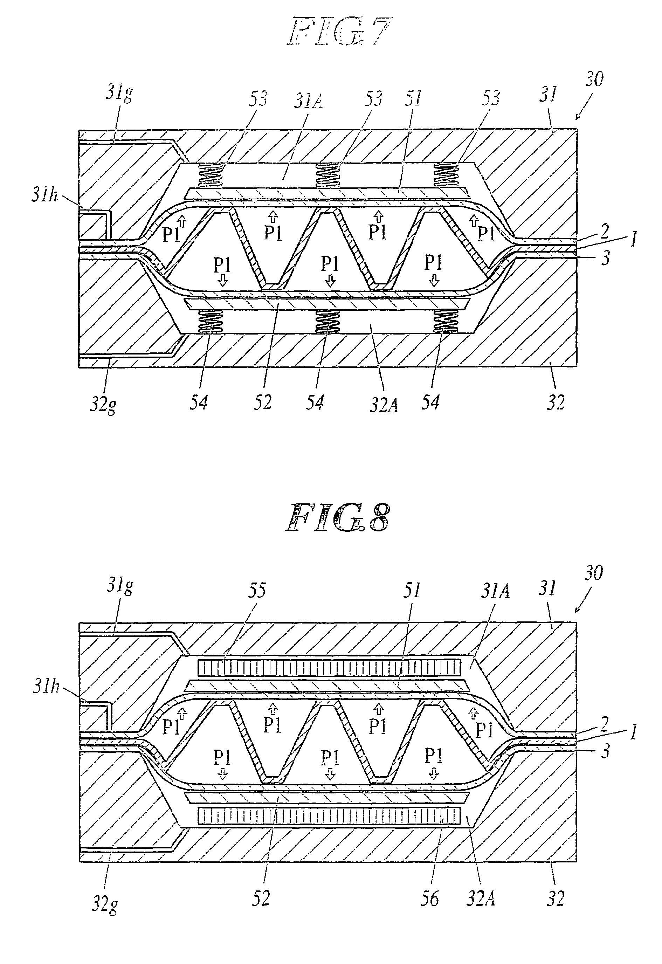

Next, a second embodiment of the present invention is described with reference to FIG. 7. As shown in FIG. 7, in the present embodiment, spring 53 is used as a supporting body to support plate 51, in place of the supporting plate 16 of the first embodiment. Similarly, spring 54 is used as a supporting body to support the plate 52. As for springs 53 and 54, any type of spring can be used, such as coil spring, plate spring, or the like.

The spring 53 that supports the plate 51 is disposed in between the plate 51 and the internal wall of the first forming mold 31 which faces the plate 51, at the time of setting the mold, at latest. In a similar manner, the spring 54 that supports the plate 52 is disposed in between the plate 52 and the internal wall of the second forming mold 32 which faces the plate 52. Operation efficiency can be improved, by fixing the plates 51 and 52 to the first forming mold 31 and to the second forming mold 32 through the springs 53 and 54 respectively, and using them repeatedly.

Springs 53 and 54 are chosen so that at the initial state, which is after closing the mold and before forming begins, the plates 51 and 52 are each attached firmly to the face sheets 2 and 3.

According to the structure described above, the processing is conducted in a similar manner as the first embodiment. However, the pressures P2 and P3 applied to the external side are eliminated. In addition, inert gas provided to the internal spaces 31A and 32A at the time of diffusion bonding is discharged from the internal spaces 31A and 32A before the super plastic forming.

In the processing of the super plastic forming, in accordance with the increase of the pressure P1 applied to the internal of panel, pressing force of the plates 51 and 52, that presses the face sheets 2 and 3, by the elastic force of the springs 53 and 54 increases, Accordingly, elastic deformation of the springs 53 and 54 proceeds, and the plates 51 and 52 move along with this elastic deformation. Pressure P1 is increased so that the plates 51 and 52 move within a desired speed.

### [Third Embodiment]

Next, a third embodiment of the present invention is described with reference to FIG. 8. As shown in FIG. 8, in the present embodiment, a metal honeycomb 55 is used as a supporting body to support the plate 51, in place of the supporting plate 16 of the first embodiment. Similarly, a metal honeycomb 56 is used as a supporting body to support the plate 52.

At the time of setting the mold, the metal honeycomb 55 that supports the plate 51 is disposed in between the plate 51 and the internal wall of the first forming mold 31 that faces the plate 51. In a similar manner, the metal honeycomb 56 that supports the plate 52 is disposed in between the plate 52 and the internal wall of the second forming mold 32 that faces the plate 52. The metal honeycombs 55 and 56 are used in a disposable manner. If the misalignment of position of the plates 51 and 52 arises as a problem, the plates 51 and 52 are each locked to the first forming mold 31 and the second forming mold 32 respectively, through the honeycombs 55 and 56. However, operation efficiency will improve when the honeycombs 55 and 56 are kept so that they are easily detached at the time of the completion of forming.

The thicknesses of the metal honeycombs 55 and 56 are chosen so that at the initial state, which is after closing the mold and before forming begins, the plates 51 and 52 are each attached firmly to the face sheets 2 and 3, and the metal honeycombs 55 and 56 come in contact with the internal surfaces of the forming molds 31 and 32, and the plates 51 and 42.

The metal honeycombs have a property that plastic deformation of a constant compression direction goes at approximately constant load. Any other material with similar property can be also used.

According to the structure described above, the processing is conducted in a similar manner as the first embodiment. However, the pressures P2 and P3 applied to the external side are eliminated. In addition, inert gas provided to the internal spaces 31A and 32A at the time of diffusion bonding is discharged from the internal spaces 31A and 32A before the super plastic forming.

In the processing of the super plastic forming, in accordance with the increase of the pressure P1 introduced to the internal of panel, pressing force of the plates 51 and 52 that press the face sheets 2 and 3 increases. When the metal honeycombs 55 and 56 yield within increasing the pressure P1, plastic deformation of the metal honeycombs 55 and 56 is started, and the plastic deformation of the metal honeycombs 55 and 56 proceeds with almost no increase in the pressure P1. The plates 51 and 52 move along with this plastic deformation. According to the present embodiment, in contrast to the second embodiment, the plates 51 and 52 can be moved within a constant speed with almost no increase in the pressure P1 after the plastic deformation is started.

### [Fourth Embodiment]

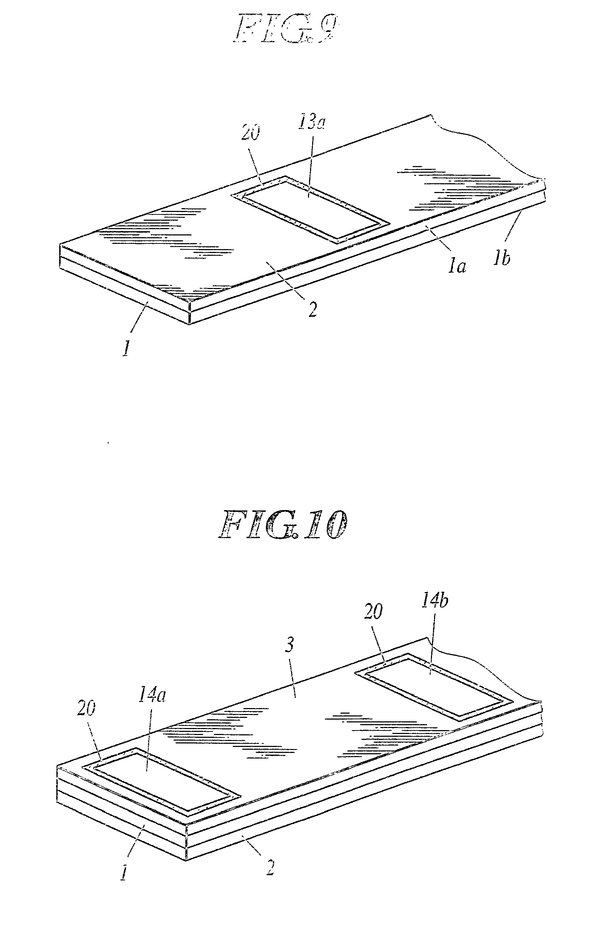

Next, a fourth embodiment of the present invention will be described with reference to FIGS. 9 and 10. This fourth embodiment is conducted by altering the processing of forming the laminated body 10 with the core sheet 1 and the face sheets 2 and 3, as shown in FIGS. 1 and 2, to the processing shown in FIGS. 9 and 10. The fourth embodiment can be applied to each of the embodiments from the first embodiment to the third embodiment.

That is, as shown in FIG. 9, face sheet 2 is overlapped on one side 1a of the core sheet 1, and the face sheet 2 and the core sheet 1 are welded to each other by an electron beam welding unit 20 that is structured by an electron beam welding section that surrounds each of the bonding regions of 13a through 13e (bonding region 13a is shown in FIG. 9), in a vacuum atmosphere. At the same time, as shown in FIG. 10, face sheet 3 is overlapped on the other side 1b of the core sheet 1, wherein the other side 1b is a side other than the side that is welded with the face sheet 2. The face sheet 3 and the core sheet 1 are welded to each other by an electron beam welding unit 20 that is structured by an electron beam welding section that surrounds each of the bonding regions of 14a through 14d (bonding regions 14a and 14b are shown in FIG. 10). Since the circumferences of bonding regions of 13a through 13e and 14a through 14d are surrounded, they are maintained in a vacuum state.

After setting the laminated body 10, obtained by the aforementioned processing, into the forming mold 30 in a similar manner to the first embodiment, the processing of diffusion bonding in the first embodiment is omitted, and the processing of super plastic forming is conducted in a similar manner to the first embodiment. At this super plastic forming processing, super plastic forming and diffusion bonding can be proceeded simultaneously.

According to the fourth embodiment, by welding the circumference of the bonding region with the electron beam welding section, the vacuum state of the bonding region can be maintained. Additionally, by proceeding super plastic forming and diffusion bonding simultaneously, time required for forming can be shortened. Further, since the non-bonding regions do not go under diffusion bonding, application of anti-bonding agent can be omitted, and number of processing as well as manufacturing cost can be decreased.

In addition, concerning diffusion bonding in which insert material such as Cu-Ni plating is applied to the bonding surface of the bonding region, in other words liquid interface diffusion bonding, it can be conducted in a similar manner. The present invention is not limited to the embodiment described above and can be modified so long as it does not deviate from the scope of the present invention.

Further, as a gas flow passage to provide forming gas in between the core sheet 1 and the face sheets 2 and 3, concerning the aforementioned embodiment, forming gas providing hole 8 was provided so that one end penetrates the face sheet 2 in the thickness direction. However, it can be also provided so that the forming gas introduction groove 7 is elongated to reach the end of the core sheet 1, a stainless tube without super plasticity is inserted into this groove, and face sheet 2 with its periphery sealed is overlapped to the core sheet 1. Stainless tube without super plasticity is preferable, since concerning flow passage directly provided to face sheet or core sheet, resistance increases due to the hole of the flow passage being narrowed by the pressure and hot temperature of jig, thus resulting in elongation of time required to provide forming gas. However, by inserting the stainless tube, narrowing of the flow passage can be suppressed, and the provision of the forming gas will not be inhibited.

According to the aforementioned embodiment, plates 51 and 52 were placed on both external sides of the laminated body 10, however, as shown in FIG. 11, in the case of a fomiing mold in which the laminated body 10 expands in only one side during super plastic forming, a plate can be placed on only the side which the expansion occurs.

## Claims

1. A method of forming a super plastic diffusion bonding panel, comprising the steps of:
overlapping at least two metal plates (1, 2) that are capable of conducting super plastic forming and diffusion bonding;
setting a laminated body (10) which includes the metal plates (1, 2) that are overlapped, into a forming mold (30); and
conducting diffusion bonding for overlapped portions of the metal plates that correspond to a bonding region, by heating inside the forming mold (30), as well as conducting super plastic forming of a panel with a pressure applied to a non-bonding region (4a, 4b, 4c) in between the metal plates by introducing inert gas;
wherein a plate (51, 52) is placed on the external side of one of the metal plates which is an outermost layer of the laminated body;
**characterised in that** the plate (51, 52) maintains a constant figure during the super plastic forming, is provided with a forming surface to form a face of the panel on one side of the plate, and can fit into the forming mold (30) with a space for the panel to occupy at a state in which the mold is closed after completion of forming;
a supporting body (16) that supports the plate is disposed in between the plate (51, 52) and an internal wall of the forming mold (30) that faces the plate; and
super plastic forming is conducted in the state that the mold (30) is closed, while pressing the forming surface of the plate (51, 52) to the one of the metal plates (1, 2) which is the outermost layer by the supporting body (16), and moving the plate along movement of surface of the outermost layer due to expansion of the laminated body (10) by the inert gas.

2. The method of forming a super plastic diffusion bonding panel according to claim 1, wherein:
the supporting body (53, 54) to support the plate is deformable when super plastic forming is conducted;
flow passage of gas is blocked within forming space in the forming mold by setting the laminated body (10), the plate (51, 52), and the first supporting body into the forming mold (30) and closing the forming mold; and
the pressing is conducted by a lower pressure that is lower than the pressure applied to non-bonding region, and is applied in between the first supporting body and internal wall of the forming mold that face the first supporting body, and the movement is conducted by pressure difference between the lower pressure and the pressure applied to non-bonding region.

3. The method of forming a super plastic diffusion bonding panel according to claim 1, wherein:
the supporting body supports the plate by elastic deformation; and
the pressing is conducted by elastic force of the second supporting body, and the movement is conducted along with elastic deformation of the second supporting body.

4. The method of forming a super plastic diffusion bonding panel according to claim 1, wherein:
the supporting body (56) supports the plate (51, 52) and yields by a pressure of a predetermined pressure (P1) or larger; and
the pressing is conducted by pressing the third supporting body (56) with the pressure applied to non-bonding region, and the movement is conducted along with plastic deformation of the third supporting body.

5. The method of forming a super plastic diffusion bonding panel according to claim 4, wherein the supporting body is a metal honeycomb (56).

## Patentansprüche

1. Verfahren zur Formung einer superplastischen Diffusionsbindungsplatte, das folgende Schritte umfasst:
Überlappen von mindestens zwei Metalltafeln (1, 2), die in der Lage sind, eine superplastische Formungs- und Diffusionsbindung auszuführen;
Anordnen eines laminierten Körpers (10), der die Metalltafeln (1, 2) umfasst, die überlappt sind, in eine Form (30); und
Ausführen einer Diffusionsbindung für überlappte Abschnitte der Metalltafeln, die einem Bindungsbereich entsprechen, indem das Innere der Form (30) erwärmt wird und eine superplastische Formung einer Platte mit einem Druck durchgeführt wird, der auf einen Nicht-Bindungsbereich (4a, 4b, 4c) zwischen den Metalltafeln ausgeübt wird, indem ein inertes Gas eingeleitet wird;
wobei eine Tafel (51, 52) an der Außenseite einer der Metalltafeln, die eine äußerste Schicht des laminierten Körpers ist, angeordnet wird;
**dadurch gekennzeichnet, dass** die Tafel (51, 52) während der superplastischen Formung eine konstante Figur beibehält, mit einer Formungsoberfläche versehen ist, um eine Fläche der Platte an einer Seite der Tafel zu bilden, und in die Form (30) passen kann, wobei ein Freiraum für die Platte beibehalten wird, den sie in einem Zustand einnehmen kann, bei dem die Form nach Abschluss der Formung geschlossen ist;
ein Stützkörper (16), der die Tafel stützt, zwischen der Tafel (51, 52) und einer Innenwand der Form (30), die der Tafel zugewandt ist, angeordnet ist; und
eine superplastische Formung in dem Zustand ausgeführt wird, in dem die Form (30) geschlossen ist, während die Formungsfläche der Tafel (51, 52) von dem Stützkörper (16) gegen jene der Metalltafeln (1, 2), die die äußerste Schicht ist, gepresst wird und die Tafel entlang der Oberflächenbewegung der äußersten Schicht aufgrund der Ausdehnung des laminierten Körpers (10) durch das inerte Gas bewegt wird.

2. Verfahren zur Formung einer superplastischen Diffusionsbindungsplatte nach Anspruch 1, wobei:
der Stützkörper (53, 54) zur Stützung der Tafel verformbar ist, wenn eine superplastische Formung durchgeführt wird;
der Strömungsdurchgang des Gases in dem Formungsraum in der Form durch Anordnen des laminierten Körpers (10), der Tafel (51, 52) und des ersten Stützkörpers in die Form (30) und Schließen der Form blockiert ist; und
die Pressung mit Hilfe eines niedrigeren Drucks durchgeführt wird, der niedriger ist, als der Druck, der auf den Nicht-Bindungsbereich ausgeübt wird, und zwischen dem ersten Stützkörper und der Innenwand der Form, die dem ersten Stützkörper zugewandt ist, ausgeübt wird, und die Bewegung durch einen Druckunterschied zwischen dem niedrigeren Druck und dem Druck, der auf den Nicht-Bindungsbereich ausgeübt wird, durchgeführt wird.

3. Verfahren zur Formung einer superplastischen Diffusionsbindungsplatte nach Anspruch 1, wobei:
der Stützkörper die Tafel durch elastische Verformung stützt; und
die Pressung durch elastische Kraft des zweiten Stützkörpers ausgeführt wird und die Bewegung zusammen mit der elastischen Verformung des zweiten Stützkörpers ausgeführt wird.

4. Verfahren zur Formung einer superplastischen Diffusionsbindungsplatte nach Anspruch 1, wobei:
der Stützkörper (56) die Tafel (51, 52) stützt und mit Hilfe eines Drucks eines vorherbestimmten Drucks (P1) oder mehr nachgibt; und
die Pressung durch Pressung des dritten Stützkörpers (56) mit dem Druck ausgeführt wird, der auf einen Nicht-Bindungsbereich ausgeübt wird und die Bewegung zusammen mit einer plastischen Verformung des dritten Stützkörpers ausgeführt wird.

5. Verfahren zur Formung einer superplastischen Diffusionsbindungsplatte nach Anspruch 4, wobei der Stützkörper eine Metallwabe (56) ist.

## Revendications

1. Procédé de formage d'un panneau de soudage par diffusion superplastique, comprenant les étapes consistant à :
chevaucher au moins deux plaques métalliques (1, 2) aptes à exécuter un formage superplastique et un soudage par diffusion ;
placer un corps laminé (10) qui comporte les plaques métalliques (1, 2) qui sont chevauchées, dans un moule de formage (30) ; et
exécuter le soudage par diffusion de parties chevauchées des plaques métalliques qui correspondent à une région de soudage, par chauffage à l'intérieur du moule de formage (30), ainsi qu'à exécuter le formage superplastique d'un panneau avec une pression appliquée sur une région non de soudage (4a, 4b, 4c) entre les plaques métalliques par introduction d'un gaz inerte ;
dans lequel une plaque (51, 52) est placée sur le côté externe de l'une des plaques métalliques qui est une couche la plus externe du corps laminé ;
**caractérisé en ce que** la plaque (51, 52) conserve une forme constante durant le formage superplastique, est dotée d'une surface de formage afin de former une face du panneau sur un côté de la plaque, et peut entrer dans le moule de formage (30) en laissant un espace qu'occupera le panneau lorsque le moule sera fermé au terme du formage ;
un corps de support (16) qui supporte la plaque est disposé entre la plaque (51, 52) et une paroi interne du moule de formage (30) qui fait face à la plaque ; et
un formage superplastique est exécuté avec le moule (30) fermé, pressant la surface de formage de la plaque (51, 52) sur l'une des plaques métalliques (1, 2) qui est la couche la plus externe par le corps de support (16), et en déplaçant la plaque le long du mouvement de la surface de la couche la plus externe dû à l'allongement du corps laminé (10) par le gaz inerte.

2. Procédé de formage d'un panneau de soudage par diffusion superplastique selon la revendication 1, dans lequel :
le corps de support (53, 54) pour supporter la plaque est déformable lors du formage superplastique ;
le passage d'un écoulement de gaz est bloqué dans l'espace de formage dans le moule de formage en plaçant le corps laminé (10), la plaque (51, 52), et le premier corps de support dans le moule de formage (30) et en fermant le moule de formage ; et
l'action de pression est effectuée à une pression inférieure à la pression appliquée à la région non de soudage, et est appliquée entre le premier corps de support et la paroi interne du moule de formage qui fait face au premier corps de support, et le mouvement est exécuté par la différence de pression entre la pression inférieure et la pression appliquée à la région non de soudage.

3. Procédé de formage d'un panneau de soudage par diffusion superplastique selon la revendication 1, dans lequel :
le corps de support supporte la plaque par déformation élastique ; et
l'action de pression est exécutée par la force élastique du deuxième corps de support, et le mouvement est exécuté avec la déformation élastique du deuxième corps de support.

4. Procédé de formage d'un panneau de soudage par diffusion superplastique selon la revendication 1, dans lequel :
le corps de support (56) supporte la plaque (51, 52) et cède par une pression prédéterminée (P1) ou supérieure ; et
l'action de pression est exécutée en pressant le troisième corps de support (56) avec la pression appliquée à la région non de soudage, et le mouvement est exécuté avec la déformation plastique du troisième corps de support.

5. Procédé de formage d'un panneau de soudage par diffusion superplastique selon la revendication 4, dans lequel le corps de support est une structure alvéolaire métallique (56).
